## Europäisches Patentamt

## European Patent Office

## Office européen des brevets

(19)

(11) Veröffentlichungsnummer: **0 056 427**
**B1**

(12) **EUROPÄISCHE PATENTSCHRIFT**

(45) Veröffentlichungstag der Patentschrift:
06.02.85

(21) Anmeldenummer: **81107629.8**

(22) Anmeldetag: **25.09.81**

(51) Int. Cl.⁴: **C 08 G 59/14**, C 08 F 220/00,
C 08 F 220/04, C 08 F 220/06,
C 08 F 220/32, C 08 F 220/46,
C 08 F 212/02, C 08 F 218/08,
C 08 L 63/00, C 08 F 2/38

(54) **Verfahren zum Flexibilisieren von Epoxidharzen.**

(30) Priorität: **17.01.81 DE 3101343**

(43) Veröffentlichungstag der Anmeldung:
**28.07.82 Patentblatt 82/30**

(45) Bekanntmachung des Hinweises auf die Patenterteilung:
**06.02.85 Patentblatt 85/6**

(84) Benannte Vertragsstaaten:
**AT BE CH DE FR GB IT LI LU NL SE**

(56) Entgegenhaltungen:
**EP - A - 0 016 247**
**DE - A - 2 215 493**
**DE - A - 2 641 107**
**DE - A - 2 812 038**
**FR - A - 2 249 904**
**US - A - 3 697 619**

(73) Patentinhaber: **Th. Goldschmidt AG,
Goldschmidtstrasse 100 Postfach 101461,
D-4300 Essen 1 (DE)**

(72) Erfinder: **Fock, Jürgen, Dr., Mörsenbroicher Weg 114,
D-4000 Düsseldorf 30 (DE)**
Erfinder: **Schedlitzki, Dietmar, Dr., Potthoffs Börde 18,
D-4300 Essen 1 (DE)**
Erfinder: **Wacker, Holger, Am Gemeindebusch 36,
D-4300 Essen (DE)**

**Beschreibung**

Die Erfindung betrifft ein Verfahren zum Flexibilisieren von Epoxidharzen durch Zusatz von Carboxylgruppen aufweisenden Polymerisaten.

Aus dem Stand der Technik sind verschiedene Möglichkeiten bekannt, Epoxidharze zu flexibilisieren. So kann z.B. eine Flexibilisierung dadurch erreicht werden, dass man spezielle Härter, wie z.B. Polyaminoamide, verwendet. In vielen Fällen hat man jedoch bezüglich der Härter keine Wahlmöglichkeit, z.B. wenn die Härtungstemperatur, die Aushärtungsgeschwindigkeit oder die Glastemperatur des gehärteten Epoxidharzes vorgeschrieben sind. In diesen Fällen ist man gezwungen, Härter, wie Dicyandiamid, Polycarbonsäureanhydride oder kurzkettige aliphatische Polyamide, zu verwenden, welche jedoch zu spröden Aushärtungsprodukten führen. Es ist dann notwendig, die Epoxidharze durch Zusatz von Modifizierungsmitteln zu flexibilisieren. Aber auch im Falle flexibler Härter, z.B. der Polyaminoamide, ist häufig eine zusätzliche Flexibilisierung des Epoxidharzes erwünscht. Die Modifizierungsmittel können dabei in dem Epoxidharz in Form eines physikalischen Gemisches verteilt sein oder mit dem Epoxidharz reagieren. Die meisten der bekannten Modifizierungsmittel gehören der Gruppe der nichtreaktiven Zusätze an. Zu diesem Stand der Technik wird auf das Buch von H. Jahn «Epoxidharze», VEB Deutscher Verlag für Grundstoffindustrie, Leipzig, 1969, verwiesen. Als reaktive Modifizierungsmittel wählt man Produkte aus, die Gruppen aufweisen, welche mit den Epoxidgruppen des Epoxidharzes zu reagieren in der Lage sind, z.B. Carboxylgruppen. Es ist dem Fachmann verständlich, dass bei der Reaktion mit dem Modifizierungsmittel nur ein Teil der Epoxidgruppen reagieren darf, um die Aushärtung der Epoxidharze noch möglich zu machen, der Anteil des eingebauten Modifizierungsmittels jedoch so gross sein muss, dass die angestrebte Flexibilisierung erzielt wird.

Als reaktive Modifizierungsmittel sind aus der US-PS 3 948 849 Butadienacrylnitrilcopolymerisate eines Molekulargewichtes von 3000 mit endständigen Carboxylgruppen bekannt. Die Modifizierung der Epoxidharze erfolgt vor der Aushärtung durch Erwärmung der das Modifizierungsmittel enthaltenden Epoxidharze auf 160°C für etwa 30 Minuten. Bei Verwendung derartig modifizierter Epoxidharze als Klebmittel erhält man Verklebungen mit elastischen Fugen. Ein Nachteil dieser Verbindungen ist jedoch, dass im Gerüst des ausgehärteten modifizierten Epoxidharzes olefinische Doppelbindungen zurückbleiben, die aufgrund ihrer Oxidierbarkeit die chemischen und physikalischen Eigenschaften der ausgehärteten Harze beeinträchtigen.

Der Erfindung liegt die Aufgabe zugrunde, reaktive Modifizierungsmittel für Epoxidharze zu finden, welche eine möglichst hohe Elastifizierung ermöglichen, ohne dass die Haftung der modifizierten Epoxidharze an Grenzflächen beeinträchtigt wird, wobei die Viskosität der Epoxidharze für die Modifizierungsmittel möglichst wenig erhöht werden soll und wobei die modifizierten Epoxidharze in ausgehärtetem Zustand chemisch und physikalisch beständig sind.

Die Lösung dieser erfindungsgemässen Aufgabe gelingt dadurch, dass man den Epoxidharzen vor der Härtung Copolymerisate, die durch gemeinsame Polymerisation von

$a_1$) 40 bis 87 Gew.-% einer oder mehrerer Alkylester der Acrylsäure mit 1 bis 8 Kohlenstoffatomen im Alkylrest,

$a_2$) 10 bis 40 Gew.-% Vinylacetat und/oder Acrylnitril,

$a_3$) 1 bis 20 Gew.-% Acryl-, Methacryl- und/oder Itaconsäure,

$a_4$) 1 bis 5 Gew.-% Glycidylacrylat und/oder Glycidylmethacrylat,

$a_5$) 0 bis 35 Gew.-% Acryl- und/oder Vinylmonomeren, die von den Monomeren $a_1$) bis $a_4$) verschieden sind,

in Gegenwart eines mercaptogruppenhaltigen Reglers, welcher mindestens eine Carboxylgruppe aufweist,

erhalten worden sind, und wobei die Copolymerisate ein mittleres im Dampfdruckosmometer gemessenes Molekulargewicht von 1000 bis 3000 haben, in solchen Mengen zusetzt, dass 1 bis 10 Mol-% der Epoxidgruppen mit den Carboxylgruppen des Copolymerisates reagieren.

Besonders bevorzugt sind als Modifizierungsmittel Copolymerisate eines mittleren Molekulargewichtes von 1500 bis 2500.

Eine besonders gute Modifizierung wird dann erreicht, wenn die Copolymerisate im Mittel 1,5 bis 2,5 Carboxylgruppen je Molekül aufweisen.

Die Copolymerisate werden in an sich bekannter Weise durch radikalische Polymerisation der Monomeren erhalten.

Die Monomeren $a_1$), die den Hauptanteil des Copolymerisates bilden, sind Alkylester der Acrylsäure mit 1 bis 8 Kohlenstoffatomen im Alkylrest, z.B. Methylacrylat, Ethylacrylat, Butylacrylat oder 2-Ethylhexylacrylat.

Die Monomeren $a_5$), welche gegebenenfalls, aber nicht notwendigerweise, im Copolymerisat enthalten sind, können z.B. Acrylamid oder -methacrylamid, Styrol, Isopropylidenacetat oder Vinylpropionat, sein.

Als mercaptogruppenhaltige Regler, welche mindestens eine Carboxylgruppe im Molekül aufweisen, sind insbesondere Thioglykolsäure, 3-Mercaptopropionsäure oder Thiomilchsäure brauchbar.

Als Epoxidharze können im Prinzip die dem Fachmann bekannten Epoxidharze verwendet werden. Besonders bevorzugt sind Epoxidharze auf Basis Bisphenol-A oder F und Epichlorhydrin. Weitere Beispiele von Epoxidharzen sind der Diglycidylether des hydrierten Bisphenol-A, p-Glycidyloxy-N,N-diglycidylanilin oder cycloaliphatische Polyepoxidverbindungen, wie sie z.B. in H. Jahn «Epoxidharze», VEB Deutscher Verlag für Grundstoffindustrie, Leipzig, 1969, oder in H. Batzer und F. Lohse in «Ullmanns Enzyklopädie der technischen Chemie», Band 10, S. 563 ff., 4. Auflage, Verlag Chemie, Weinheim 1975, beschrieben sind.

Die Modifizierung der Epoxidharze kann auf verschiedene Weise erfolgen. So ist es möglich, die Menge an Modifizierungsmittel der Gesamtmenge des Epoxidharzes zuzusetzen. Wenn auch die Reaktion der Carboxylgruppen des Modifizierungsmittels mit den Epoxidgruppen des Epoxidharzes bereits bei Raumtemperatur einsetzt, ist es doch bevorzugt, das Gemisch auf Temperaturen von 100 bis 150°C zu erwärmen. Die Umsetzung verläuft dann innerhalb von 30 Minuten bis zu 4 Stunden. Man kann jedoch auch die Gesamtmenge des Modifizierungsmittels nur einem Teil der Gesamtmenge des Epoxidharzes zusetzen. Man muss nur beachten, dass diese modifizierte Teilmenge des Epoxidharzes noch genügend Epoxidgruppen aufweist, dass beim Vermischen dieser Menge mit dem restlichen Epoxidharz und dem nachfolgenden Aushärten ein reaktiver Einbau dieser modifizierten Teilmenge gewährleistet ist. Es genügt, wenn die modifizierte Teilmenge noch etwa 40 Mol-% Epoxidgruppen aufweist. Der Vorteil dieser Verfahrensweise besteht darin, dass die Modifizierung bereits beim Hersteller erfolgen kann. Es ist weiter möglich, die Teilmodifizierung mit einem Epoxidharz durchzuführen, dessen Zusammensetzung von der der restlichen Menge Epoxidharz abweicht. Insbesondere kann man die Teilmodifizierung mit einem niedrigviskosen Epoxidharz durchführen. Hierfür eignen sich besonders die Diglycidylether aliphatischer Diole, z.B. des Butandiol-1.4; Hexandiol-1.6 oder des Neopentylglykols.

Es kann von Vorteil sein, wenn man dem Gemisch von Epoxidharz und Carboxylgruppen aufweisenden Copolymerisat einen Katalysator in wirksamen Mengen zusetzt, der die Modifizierungsreaktion beschleunigt. Besonders bevorzugt sind als Katalysatoren quaternäre Ammonium- oder Phosphoniumverbindungen, wie z.B. Tetramethylammoniumchlorid oder -jodid, Benzyltrimethylammoniumchlorid, Tetrabutylphosphoniumchlorid oder -acetat.

Für die Härtung der modifizierten Epoxidharze kann man die aus dem Stand der Technik bekannten Härter verwenden. Die folgenden Härter sind insbesondere für die Heisshärtung, d.h. die Härtung bei Temperaturen oberhalb 130°C bis etwa 220°C, brauchbar: Dicyandiamid und dessen Derivate; Polycarbonsäureanhydride, wie Phthalsäureanhydrid; Methylhexahydrophthalsäureanhydrid; Pyromellitsäuredianhydrid. Für Warmhärtung bei Temperaturen um 100°C eignen sich aromatische Polyamide, wie m-Phenylendiamin; cycloaliphatische Polyamine. Die Härtung bei Raumtemperatur kann mit Polyaminoamiden; Polyaminoimidazolinen; modifizierten aliphatischen Polyaminen oder Polyetherpolyaminen durchgeführt werden. Besonders vorteilhaft sind für die Härtung bei Raumtemperatur Mischungen aus Polyaminoamiden bzw. Polyaminoimidazolinen einerseits und aliphatischen Polyaminen oder Polyetherpolyaminen andererseits. Bei Verwendung einer derartigen Härtermischung erhält man mit den modifizierten Epoxidharzen bei der Verklebung besonders hohe Festigkeitswerte. Die jeweilige Härtungstemperatur und/oder die Härtungszeit kann durch Verwendung bekannter Beschleuniger herabgesetzt bzw. verkürzt werden. Solche Beschleuniger sind z.B. tertiäre Amine.

Es war zwar bereits aus der Zeitschrift «Farbe und Lack», 82, (1976), Seite 1105 ff. bekannt, niedermolekulare Carboxylgruppen enthaltende Acrylatharze ihrerseits, die als Einbrennlacke verwendet werden, mit relativ geringen Mengen eines Epoxidharzes zu härten. Aus der Verträglichkeit dieser Produkte konnte aber nicht geschlossen werden, dass ein Epoxidharz als überwiegendes Hauptprodukt mit relativ geringen Mengen eines niedermolekularen Carboxylgruppen enthaltenden Copolymerisates so modifiziert werden kann, dass bei Erhalt der Haftung der ausgehärteten Epoxidharze eine hohe Elastifizierung bewirkt wird.

Die erfindungsgemäss modifizierten Epoxidharze eignen sich in besonderer Weise als Klebstoffe, da sie gut an den zu verbindenden Grenzflächen haften und eine elastische Klebfuge ausbilden. Man kann aber auch mit den modifizierten, jedoch noch nicht ausgehärteten Epoxidharzen Trägerbahnen, wie z.B. Glasfaservliese oder Gewebe, imprägnieren und zu Schichtstoffen aushärten. Sie können z.B. in der Elektroindustrie zur Härtung von gedruckten Schaltungen verwendet werden. Eine weitere Einsatzmöglichkeit dieser sogenannten Prepregs besteht in der Herstellung von Formteilen, wie z.B. im Bootsbau, sowie für Reparaturzwecke, z.B. im Karosseriebau. Des weiteren ist eine Verwendung der modifizierten Epoxidharze als Lackrohstoffe oder als Giessharze vorteilhaft.

In den folgenden Beispielen wird die nicht beanspruchte Herstellung der Modifizierungsmittel, die erfindungsgemässe Modifizierung von Epoxidharzen und die Eigenschaften der noch nicht ausgehärteten sowie der ausgehärteten modifizierten Epoxidharze beschrieben.

*Herstellung der niedermolekularen Acrylpolymerisate*

Zu 120 g siedendem Toluol wird unter Rühren und Einleiten von Stickstoff eine Lösung aus 400 g Monomerengemisch, 1,6 g Azodiisobuttersäuredinitril und 12 bis 14 g Thioglykolsäure innerhalb von 1,5 Stunden zugetropft, wobei der Rückfluss erhalten bleiben soll. Danach wird weitere 2 Stunden unter Rückfluss erwärmt. Nach Zusatz von 1,2 g Azodiisobuttersäuredinitril wird erneut 1,5 Stunden unter Rückfluss erwärmt. Das Lösungsmittel und geringe Mengen von nicht umgesetzten Monomeren werden im Vakuum bei einer Temperatur von 80 bis 110°C abgezogen. Die anfallenden 100%igen Acrylpolymerisate sind bei Raumtemperatur mittel- bis hochviskos.

Die Monomerenzusammensetzung, der Reglergehalt und das mittlere Molekulargewicht, das im Dampfdruckosmometer gemessen wurde, sind der Tabelle 1 zu entnehmen.

*Herstellung der modifizierten Epoxidharze*

Zur Herstellung der modifizierten Epoxidharze werden Gemische aus einem Epoxidharz aus Bisphenol-A/Epichlorhydrin mit einem Epoxidäquivalent von 185 g/Mol mit wechselnden Mengen der Acrylcopolymerisate nach Zusatz von 0,03% Tetramethylammoniumchlorid unter Rühren 2 Stunden auf 120°C erhitzt, wobei die Reaktion unter Stickstoff durchgeführt wird. Die Mengenverhältnisse an Epoxidharz und Acrylcopolymerisat gehen aus Tabelle 1 hervor.

Nach dem Abkühlen erhält man bei Raumtemperatur flüssige Epoxidharze, deren Viskosität gegenüber der des unmodifizierten Epoxidharzes (ca. 9000 mPas bei 25°C) nur mässig erhöht ist. Die Viskosität und das Epoxidäquivalent der modifizierten Epoxidharze können der Tabelle 1 entnommen werden.

Mit dem in Tabelle 1 unter Nr. 5 aufgeführten Acrylcopolymerisat aus 82 Gew.-% n-Butylacrylat, 15 Gew.-% Vinylacetat, 2 Gew.-% Acrylsäure und 1,0 Gew.-% Glycidylmethacrylat werden zwei Addukte hergestellt aus:

a) 70 g Acrylcopolymerisat Nr. 5
   30 g Epoxidharz aus Bisphenol-A/Epichlorhydrin, Epoxidäquivalent 185
b) 80 g Acrylpolymerisat Nr. 5
   20 g Neopentylglykoldiglycidylether technischer Reinheit, Epoxidäquivalent 150

Die durch 2stündiges Erhitzen auf 120°C unter Zusatz von 0,03% Tetramethylammoniumchlorid erhaltenen Addukte weisen Epoxidäquivalente von

a) 900
b) 1800

auf. Aus den Addukten und dem Epoxidharz aus Bisphenol-A/Epichlorhydrin (Epoxidäquivalent 185) werden zwei weitere modifizierte Epoxidharze durch Mischen bei Raumtemperatur in folgendem Verhältnis hergestellt:

| Modifiziertes Epoxidharz | | |
|---|---|---|
| Lfd. Nr. | Zusammensetzung | Epoxid-äquivalent |
| 6 | 25 g Addukt A<br>75 g Epoxidharz | 23: |
| 7 | 25 g Addukt B<br>75 g Epoxidharz | 238 |

## Tabelle 1

### Zusammensetzung und Eigenschaften modifizierter Epoxidharze

| Lfd. Nr. | Acrylcopolymerisate | | | | modifizierte Epoxidharze Zusammensetzung | | | |
|---|---|---|---|---|---|---|---|---|
| | Monomerenzusammen-setzung Gew.-% | | Regler 1) Gew.-% — | mittl. Molekular-gewicht | Epoxid-harz Gew.-Teile | Acryl-copoly-merisat Gew.-Teile | Epoxid-äquiva-lent | Viskosität bei 25°C mPas |
| 1 | 63,5 n-Butylacrylat<br>32,0 Vinylacetat<br>3,5 Acrylsäure<br>1,0 Glycidylmethacrylat | a₁)<br>a₂)<br>a₃)<br>a₄) | 3,5 Thio-glykol-säure | 1750 | 90 | 10 | 208 | 23 000 |
| 2 | wie 1 | | wie 1 | 1750 | 80 | 20 | 237 | 43 000 |
| 3 | 83,0 n-Butylacrylat<br>14,0 Acrylnitril<br>3,5 Acrylsäure<br>1,0 Glycidylmethacrylat | a₁)<br>a₂)<br>a₃)<br>a₄) | 3,0 Thio-glykol-säure | 1960 | 80 | 20 | 235 | 39 000 |
| 4 | 67,5 2-Ethylhexylacrylat<br>28,0 Vinylacetat<br>3,5 Acrylsäure<br>1,0 Glycidylmethacrylat | a₁)<br>a₂)<br>a₃)<br>a₄) | 3,5 Thio-glykol-säure | 1700 | 85 | 15 | 236 | 31 000 |
| 5 | 82,0 n-Butylacrylat<br>15,0 Vinylacetat<br>2,0 Acrylsäure<br>1,0 Glycidylmethacrylat | a₁)<br>a₂)<br>a₃)<br>a₄) | 4,5 Thio-glykol-säure | 1570 | 80 | 20 | 240 | 28 000 |

1) bezogen auf 100 Gew.-Teile Monomerengemisch

### Eigenschaften der ausgehärteten modifizierten Epoxidharze

a) *Warmhärtende Epoxidharzsysteme*
Für die Härtung werden 2 verschidene Polyaminhärter eingesetzt:

   a) Triethylentetramin mit einem H-Äquivalent von 25 g/Val
   b) ein modifiziertes cycloaliphatisches Polyamin mit einem H-Äquivalent von 111 g/Val.

Die Härter werden den modifizierten Epoxidharzen in äquivalenten Mengen zugesetzt.

Für die anwendungstechnische Prüfung der Epoxidharz/Härtergemische werden 2 Festigkeitsprüfungen herangezogen.

1) Bindefestigkeit (Zugscherversuch) nach DIN 53 283
2) Winkelschälfestigkeit nach DIN 53 282

Für die Bindefestigkeit werden 1,6 mm starke Aluminiumbleche, für die Winkelschälfestigkeit 0,5 mm starke Aluminiumbleche der Qualität Al Cu Mg 2pl verwendet. Die Bleche werden vor dem Verkleben entfettet und einem Chromat-Schwefelsäure-Beizprozess (Pickling-Beize) unterzogen.

Die das Klebmittel bildenden Epoxidharz/Härtergemische werden in einer Menge von ca. 50 g/m² auf die Prüfbleche aufgetragen und bei 100°C während 20 Minuten unter leichtem Anpressdruck ausgehärtet.

Nach Abkühlung werden die Binde- und Winkelschälfestigkeit bei 20°C ermittelt. Die Werte sind aus Tabelle 2 zu entnehmen. Sie zeigen, dass sowohl die Winkelschäl- als auch die Bindefestigkeit gegenüber dem nicht modifizierten Epoxidharz erheblich erhöht wird, wenn die erfindungsgemässe Modifizierung der Epoxidharze angewendet wird.

## Tabelle 2

*Festigkeitsprüfungen von Klebmitteln aus modifizierten Epoxidharzen und Polyaminhärtern*

| | modifiziertes Epoxidharz Nr. | Polyaminhärter | Bindefestigkeit DIN 53 283 N/mm² | Winkelschälfestigkeit DIN 53282 N/mm |
|---|---|---|---|---|
| erfindungsgemäss | 1 | Triethylentetramin | 28 | 0,90 |
| | 2 | » | 31 | 0,98 |
| | 3 | » | 30 | 0,92 |
| | 4 | » | 29 | 0,90 |
| | 1 | modifiziertes cycloaliphatisches Polyamin | 29 | 1,12 |
| | 2 | » | 30 | 1,25 |
| | 3 | » | 30 | 1,30 |
| | 4 | » | 29 | 1,20 |
| nicht erfindungsgemäss | unmodifiziertes Epoxidharz *) | Triethylentetramin | 19 | 0,08 |
| | | modifiziertes cycloaliphatisches Polyamin | 21 | 0,10 |

*) Epoxidharz aus Bisphenol-A/Epichlorhydrin mit einem Epoxidäquivalentgewicht von 185 g/Mol

### b) *Heisshärtende Epoxidharzsysteme*

Aus den modifizierten Epoxidharzen und Dicyandiamid als Härter werden heisshärtende, einkomponentige Epoxidharzsysteme formuliert. Die Kleber werden auf geschliffenen Stahlproben aufgebracht und bei 180°C während 60 Minuten unter leichtem Anpressdruck ausgehärtet. Danach wird die Bindefestigkeit nach DIN 53 283 gemessen. Die Ergebnisse sind der Tabelle 3 zu entnehmen.

### Tabelle 3

*Bindefestigkeit heissgehärteter Klebmittel*

| modifiziertes Epoxidharz Nr. | Bindefestigkeit N/mm² |
|---|---|
| 2 | 42 |
| 3 | 40 |
| 5 | 41 |
| 6 | 39 |
| nicht erfindungsgemäss unmodifiziertes Epoxidharz | 30 |

### c) *Kalthärtende Epoxidharzsysteme*

Aus den modifizierten Epoxidharzen und einem handelsüblichen Polyaminoamid (H-Äquivalent 95, Viskosität 2 500 mPas bei 25°C) sowie dessen Mischung mit einem aliphatischen Etherdiamin (H-Äquivalent 50, Viskosität 15 mPas bei 25°C) bzw. einem modifizierten aliphatischen Polyamin (H-Äquivalent 75, Viskosität 400 mPas bei 25°C) werden zweikomponentige Kleber formuliert, die auf Aluminiumbleche [Vorbehandlung wie unter a)] aufgetragen und während 3 Tagen bei Raumtemperatur gehärtet werden.

Danach wird die Bindefestigkeit nach DIN 53 283 gemessen. Die Ergebnisse sind in Tabelle 4 aufgeführt. Auch hier zeigt sich, dass man mit den erfindungsgemäss modifizierten Epoxidharzen verbesserte Festigkeitswerte erhält.

## Tabelle 4

*Bindefestigkeit kaltgehärteter Klebmittel*

| modifiziertes Epoxidharz Nr. | Härter-Zusammensetzung Gew.-% | Bindefestigkeit N/mm² |
|---|---|---|
| 2 | 100 Polyaminoamid | 23 |
| 5 | » | 29 |
| 6 | » | 22 |
| 2 | 80 Polyaminoamid + 20 aliphatisches Etherdiamin | 27 |
| 3 | » » | 23 |
| 5 | » » | 27 |
| 6 | » » | 22 |
| 7 | » » | 23 |
| 2 | 85 Polyaminoamid + 15 modifiziertes aliphatisches Polyamin | 34 |
| 3 | » » | 26 |
| 5 | » » | 27 |
| 6 | » » | 23 |

nicht erfindungsgemäss

| unmodifiziertes Epoxidharz | 100 Polyaminoamid | 18 |
|---|---|---|
| | 80 Polyaminoamid + 20 aliphatisches Etherdiamin | 19 |
| | 85 Polyaminoamid + 15 modifiziertes aliphatisches Polyamin | 18 |

## Patentansprüche

1. Verfahren zum Flexibilisieren von Epoxidharzen durch Zusatz von Carboxylgruppen aufweisenden Polymerisaten, dadurch gekennzeichnet, dass man den Epoxidharzen vor der Härtung Copolymerisate, die durch gemeinsame Polymerisation von

a$_1$) 40 bis 87 Gew.-% eines oder mehrerer Alkylester der Acrylsäure mit 1 bis 8 Kohlenstoffatomen im Alkylrest,

a$_2$) 10 bis 40 Gew.-% Vinylacetat und/oder Acrylnitril,

a$_3$) 1 bis 20 Gew.-% Acryl-, Methacryl- und/oder Itaconsäure,

a$_4$) 1 bis 5 Gew.-% Glycidylacrylat und/oder Glycidylmethacrylat,

a$_5$) 0 bis 35 Gew.-% Acryl- und/oder Vinylmonomeren, die von den Monomeren a$_1$) bis a$_4$) verschieden sind,

in Gegenwart eines mercaptogruppenhaltigen Reglers, welcher mindestens eine Carboxylgruppe aufweist,
erhalten worden sind, und wobei die Copolymerisate ein mittleres im Dampfdruckosmometer gemessenes Molekulargewicht von 1000 bis 3000 haben, in solchen Mengen zusetzt, dass 1 bis 60 Mol-% der Epoxidgruppen mit den Carboxylgruppen des Copolymerisates reagieren.

2. Verfahren nach Anspruch 1, dadurch gekennzeichnet, dass man den Epoxidharzen Copolymerisate eines mittleren Molekulargewichtes von 1500 bis 2500 zusetzt.

3. Verfahren nach Anspruch 1 oder 2, dadurch gekennzeichnet, dass man den Epoxidharzen Copolymerisate zusetzt, welche im Mittel 1,5 bis 2,5 Carboxylgruppen je Molekül aufweisen.

4. Verfahren nach einem oder mehreren der vorhergehenden Ansprüche, dadurch gekennzeichnet, dass man bei der Umsetzung von Carboxyl- mit Epoxidgruppen beschleunigende Katalysatoren zusetzt.

5. Verfahren nach Anspruch 4, dadurch gekennzeichnet, dass man als Katalysatoren quaternäre Ammonium- oder Phosphoniumverbindungen in wirksamen Mengen zusetzt.

6. Verfahren nach einem oder mehreren der vorhergehenden Ansprüche, dadurch gekennzeichnet, dass man nur einen Teil der gesamten Epoxidharzmenge mit der Gesamtmenge des Copolymerisates derart modifiziert, dass die modifizierte Epoxidharzteilmenge noch mindestens 40 Mol.-% der zu Beginn der Reaktion vorhandenen Epoxidgruppen aufweist und die modifizierte Epoxidharzteilmenge mit dem restlichen Epoxidharz vermischt.

7. Verfahren nach Anspruch 6, dadurch gekennzeichnet, dass man für die Modifizierung ein Epoxidharz einsetzt, dessen Struktur von der des anschliessend zugemischten unmodifizierten Epoxidharzes abweicht.

## Claims

1. Process for rendering epoxide resins flexible by addition of polymers possessing carboxyl groups, characterised in that to the epoxide resins are added, before hardening, copolymers which have been obtained by conjoint polymerisation of

a₁) 40 to 87% by weight of one or more alkyl esters of acrylic acid, the alkyl radical containing 1 to 8 carbon atoms,

a₂) 10 to 40% by weight of vinylacetate and/or acrylonitrile,

a₃) 1 to 20% by weight of acrylic acid, methacrylic acid and/or itaconic acid,

a₄) 1 to 5% by weight of glycidyl acrylate and/or glycidyl methacrylate and

a₅) 0 to 35% by weight of acrylic monomers and/or vinyl monomers differing from the monomers a₁) to a₄),

in the presence of a regulator which contains mercapto groups and possesses at least one carboxyl group, the copolymers having a mean molecular weight, measured in a vapour pressure osmometer, of 1000 to 3000, and

the amounts added being such that from 1 to 60 mol % of the epoxide groups react with the carboxyl groups of the copolymer.

2. Process according to claim 1, characterised in that copolymers having a mean molecular weight of 1500 to 2500 are added to the epoxide resins.

3. Process according to claim 1 or 2, characterised in that copolymers which on average possess 1.5 to 2.5 carboxyl groups per molecule are added to the epoxide resins.

4. Process according to one or more of the preceding claims, characterised in that catalysts which accelerate the reaction of carboxyl groups with epoxide groups are added.

5. Process according to claim 4, characterised in that effective amounts of quaternary ammonium compounds or phosphonium compounds are added as catalysts.

6. Process according to one or more of the preceding claims, characterised in that only a part of the total amount of epoxide resin is modified with the total amount of the copolymer in such a way that the modified part of the epoxide resin still contains at least 40 ml % of the epoxide groups present at the beginning of the reaction, and that the modified part of the epoxide is mixed with the remainder of the epoxide resin.

7. Process according to claim 6, characterised in that an epoxide resin whose structure differs from that of the subsequently admixed unmodified epoxide resin is employed for the modification.

**Revendications**

1. Procédé pour rendre flexibles des résines époxides, par addition de polymères présentant des groupes carboxyle, caractérisé en ce que l'on ajoute aux résines époxydes, avant le durcissement, des copolymères que l'on a obtenus par polymérisation commune de

a₁) 40 à 87%-poids d'un ou plusieurs esters alkyliques de l'acide acrylique à 1 à 8 atomes de carbone dans le reste alkyle,

a₂) 10 à 40%-poids d'acétate de vinyle et/ou d'acrylonitrile,

a₃) 1 à 20%-poids d'acide acrylique, méthacrylique et/ou itaconique,

a₄) 1 à 5%-poids d'acrylate de glycidyle et/ou de méthacrylate de glycidyle,

a₅) 0 à 35%-poids de monomères acryliques et/ou vinyliques, qui sont différents des monomères a₁) à a₄),

en présence d'un régulateur contenant des groupes mercapto et qui présente au moins un groupe carboxyle, les copolymères ayant une masse moléculaire moyenne mesurée à l'osmomètre à pression de vapeur, de 1000 à 3000, en des quantités telles que 1 à 60%-molaires des groupes époxydes réagissent avec les groupes carboxyle du copolymère.

2. Procédé selon la revendication 1, caractérisé en ce que l'on ajoute aux résines époxydes des copolymères ayant une masse moléculaire moyenne de 1500 a 2500.

3. Procédé selon la revendication 1 ou 2, caractérisé en ce que l'on ajoute aux résines époxydes des copolymères qui présentent en moyenne 1,5 à 2,5 groupes carboxyle par molécule.

4. Procédé selon une ou plusieurs des revendications précédentes, caractérisé en ce que l'on ajoute, lors de la réaction des groupes carboxyle sur les groupes époxydes, des catalyseurs accélérateurs.

5. Procédé selon la revendication 4, caractérisé en ce que l'on ajoute en tant que catalyseurs des composés de l'ammonium ou du phosphonium quaternaire, en des quantités efficaces.

6. Procédé selon une ou plusieurs des revendications précédentes, caractérisé en ce que l'on ne modifie avec la quantité totale du copolymère qu'une partie de la quantité totale de résine époxyde, de telle sorte que la quantité partielle modifiée contienne encore au moins 40%-molaire des groupes époxydes présents au début de la réaction, et que l'on mélange à la résine époxyde restante la quantité partielle modifiée de résine époxyde.

7. Procédé selon la revendication 6, caractérisé en ce que l'on utilise pour la modification une résine époxide dont la structure s'écarte de celle de la résine époxide non modifiée ajoutée ensuite.